# EUROPÄISCHE PATENTANMELDUNG

(11) **EP 4 428 677 A1**
(43) Veröffentlichungstag der Anmeldung: **11.09.2024**
(21) Anmeldenummer: 23161092.4
(22) Anmeldetag: 10.03.2023
(51) Int. Cl.: G06F 8/60, G06F 9/455, G06F 9/54, G06F 8/61

(54) **VORRICHTUNG UND VERFAHREN ZUM BEREITSTELLEN EINES NATIVEN SOFTWAREANWENDUNGSELEMENTS, VORRICHTUNG UND VERFAHREN ZUM HANDHABEN EINES NATIVEN SOFTWAREANWENDUNGSELEMENTS**

(71) Anmelder: Siemens Aktiengesellschaft, 80333 München (DE)
(72) Erfinder: Schubert, Michael, 91161 Hilpoltstein (DE)
(74) Vertreter: Siemens Patent Attorneys

(57) **Zusammenfassung**

Vorgeschlagen werden ein Verfahren (300) und eine Vorrichtung (100) zum Bereitstellen eines nativen Softwareanwendungselements (12). Die Vorrichtung (100) weist wenigstens eine Datenschnittstelle (110) auf, die dazu eingerichtet ist, das native Softwareanwendungselement (12) zu empfangen. Zudem weist die Vorrichtung (100) eine Verarbeitungslogik (120), die dazu eingerichtet ist das native Softwareanwendungselement (12) in einen Container (10) zu packen, einen Container-Proxy (14) in den Container (10) zu packen, wobei der Container-Proxy (14) dazu eingerichtet ist, bei seiner Ausführung durch eine Container-Laufzeitumgebung das native Softwareanwendungselement (12) von der Container-Laufzeitumgebung zu einem entsprechenden nativen Betriebssystem zu überführen, und den Container (10) bereitzustellen. Zudem werden ein Verfahren (400) und eine Vorrichtung (200) zum Handhaben eines nativen Softwareanwendungselements (12) vorgeschlagen.

## Beschreibung

### TECHNISCHES GEBIET DER ERFINDUNG

Die vorliegende Erfindung betrifft allgemein das containerbasierte Verwalten von Softwareanwendungselementen. Insbesondere betrifft die Erfindung ein Verfahren zum Bereitstellen eines nativen Softwareanwendungselements, eine Vorrichtung zum Bereitstellen eines nativen Softwareanwendungselements, ein Verfahren zum Handhaben eines nativen Softwareanwendungselements, eine Vorrichtung zum Handhaben eines nativen Softwareanwendungselements und ein Computerprogramm.

### TECHNISCHER HINTERGRUND

Containerisierte Anwendungen können heute mit Container-Verwaltungsumgebungen, wie etwa Industrial Edge, Kubernetes oder dergleichen, komfortabel für einzelne und mehrere Geräte verwaltet werden. Für einige Systemeigenschaften, wie z.B. Echtzeit-Fähigkeit, industrielle Kommunikation oder dergleichen zu bewerkstelligen, kann es notwendig sein, die native Software parallel zur Container-Umgebung auf demselben Gerät zu betreiben und zu verwalten.

Zudem erfordert die Aktualisierung spezifischer Artefakte, die auch als Softwareanwendungselemente bezeichnet werden können, wie etwa Betriebssystem-Patches, Treiber-Updates, BIOS-Updates oder dergleichen, ein komplettes Image-Update. Dies macht die Verwaltung dieser Softwareanwendungselemente komplex, da beispielsweise Abhängigkeiten einzelner Softwareanwendungselemente beibehalten werden müssen. Insbesondere bei Container-Laufzeiten ist zu entscheiden, ob die Softwareanwendung mit allen Abstraktionen containerisiert werden kann oder ob beispielsweise ein neu generiertes Firmware-Bündel zu erstellen ist. Üblicherweise wird eine native Softwareanwendung mittels eines kompletten Software-Pakets und/oder ein System-Update bereitgestellt und/oder aktualisiert. Die Verwaltung von solchen kompletten Software- und/oder System-Paketen bzw. -Updates ist technisch aufwendig.

### ZUSAMMENFASSUNG DER ERFINDUNG

Es ist daher Aufgabe der Erfindung, das Verwalten eines nativen Softwareanwendungselements hinsichtlich Komplexität zu verbessern. Diese Aufgabe wird gelöst durch die Gegenstände der unabhängigen Ansprüche. Vorteilhafte Weiterbildungen sind in den abhängigen Ansprüchen angegeben.

Ein erster Aspekt schlägt ein Verfahren zum Bereitstellen eines nativen Softwareanwendungselements vor. Das Verfahren umfasst das Packen des nativen Softwareanwendungselements in einen Container. Zudem umfasst das Verfahren das Packen eines Container-Proxys in den Container, wobei der Container-Proxy dazu eingerichtet ist, bei seiner Ausführung durch eine Container-Laufzeitumgebung das native Softwareanwendungselement von der Container-Laufzeitumgebung zu einem entsprechenden nativen Betriebssystem zu überführen. Des Weiteren umfasst das Verfahren das Bereitstellen des Containers.

Damit erlaubt es das vorgeschlagene Verfahren, native Softwareanwendungselemente mittels einer Container-Verwaltungsumgebung zu verwalten. Insbesondere lässt sich die Verwaltung hinsichtlich ihrer Komplexität verbessern, da das native Softwareanwendungselement gemeinsam mit anderen container-basierten Softwareanwendungen in einer gemeinsamen Container-Verwaltungsumgebung verwaltet werden kann. Dadurch kann die Verwaltung von nativen Softwareanwendungselementen technisch gesehen auf eine Container-Verwaltungsumgebung reduziert werden. Dies erweitert die container-basierte Verwaltung von Softwareanwendungen auf native Softwareanwendungselemente. Damit ist die technische Komplexität auf Seiten des Software-Entwicklers und/oder Software-Verwalters deutlich reduziert. Auch die Nutzererfahrung, d.h. die User Experience, lässt sich dadurch erhöhen, da der Nutzer neben der Container-Laufzeitumgebung kein weiteres System bedienen muss.

Wie hierin verwendet, kann unter einer nativen Softwareanwendung beispielsweise eine Anwendung bzw. ein Softwareprogramm verstanden werden, das für die Verwendung auf einer bestimmten Plattform bzw. einem bestimmtem, d.h. nativen, Betriebssystem oder einem bestimmten Gerät entwickelt wurde. Dementsprechend kann die native Softwareanwendung und/oder das native Softwareanwendungselement auch als plattformabhängige Anwendung verstanden werden. Beispielsweise kann eine native Softwareanwendung dazu entwickelt und/oder ausgeführt sein, gerätespezifische Hardware und/oder Software zu verwenden. Zudem kann die native Softwareanwendung dazu eingerichtet sein, auf eine Anzahl von Funktionen des nativen Betriebssystems zuzugreifen, die größer ist als die Anzahl von Funktionen, auf die eine plattformübergreifende Softwareanwendung zugreifen kann. Die native Softwareanwendung und/oder das native Softwareanwendungselement kann mit einem nativen Compiler erstellt werden. Daher kann eine native Softwareanwendung beispielsweise Echtzeit-Bedingungen erfüllen, industrielle Kommunikation ermöglichen, usw. Im Gegensatz zu einer nativen Softwareanwendung können beispielsweise Webanwendungen, mobile Cloud-Anwendungen usw. als generische Anwendungen verstanden werden, die für mehrere Systeme entwickelt wurden und daher keine optimierte Leistung unter Nutzung gerätespezifischer Hardware und/oder Software bieten. Das native Softwareanwendungselement kann als ein Teil einer nativen Softwareanwendung verstanden werden. Es kann auch als Artefakt der Softwareanwendung bezeichnet werden. Hierbei kann es sich beispielsweise um einen Patch, Update, oder dergleichen handeln, welche sich auf einen Teilaspekt der nativen Softwareanwendung beziehen können. Die native Softwareanwendung und/oder das native Softwareanwendungselement kann als Computerprogramm bzw. Programmcode bereitgestellt werden.

Unter dem Container kann eine Standard-Softwareeinheit verstanden werden, die z.B. den Programmcode, Systembibliotheken, System-Tools, eine Laufzeitumgebung oder dergleichen zusammenfasst. Als Einheit lassen sich Container einfach transferieren, verlegen, usw. und von verschiedenen Betriebssystemen ausführen. Ein Container kann auch als leicht transportierfähiges Paket verstanden werden. Er kann auch als kompaktes, eigenständiges, ausführbares Softwarepaket verstanden werden. Ein solcher Container lässt sich unabhängig von einer Computerumgebung ausführen. Zur Ausführung des Containers kann die Container-Laufzeitumgebung verwendet werden. Die Container-Laufzeitumgebung kann dazu dienen, sämtliche Dateien einer Softwareanwendung zu bündeln. Zudem kann die Container-Laufzeitumgebung einen oder mehrere Services und/oder Dienste zum Interagieren mit dem nativen Betriebssystem aufweisen.

Der Container-Proxy kann als eine Art Hilfselement verstanden werden, das zum Vermitteln zwischen der Container-Laufzeitumgebung und dem nativen Betriebssystem eingerichtet ist. Er kann beispielsweise Anweisungen, Systemdienste, Programmcode, Systembibliotheken, Einstellungen, oder dergleichen umfassen. Der Container-Proxy kann auch als Einstiegspunkt zum Handhaben, Ausführen, usw. des nativen Softwareanwendungselements eingerichtet sein.

In einigen Ausführungsbeispielen kann der Container-Proxy für eine Mehrzahl von zueinander unterschiedlichen nativen Softwareanwendungselementen anwendbar sein und/oder diesen gemeinsam sein. In anderen Worten kann der Container-Container als universelles Hilfselement auch für die Nutzung mit unterschiedlichen nativen Softwareanwendungselementen eingerichtet sein. Dies vereinfacht die Verwaltung nativer Softwareanwendungselemente noch weiter.

In einigen Ausführungsbeispielen kann der Container-Proxy eine Verknüpfung zwischen dem nativen Softwareanwendungselement und der Container-Laufzeitumgebung und/oder dem nativen Betriebssystem aufweisen und/oder eine solche Verknüpfung ausbilden. Diese Verknüpfung kann beispielsweise über Anweisungen, Systemdienste, Programmcode, Systembibliotheken, Einstellungen, oder dergleichen bewerkstelligt werden.

In einigen Ausführungsbeispielen kann das Verfahren ferner das Packen eines Manifests in den Container umfassen. Das Manifest kann spezifisch für das native Softwareanwendungselement sein und zumindest Informationen zu dem nativen Softwareanwendungselement und/oder zur Verwendung und/oder zum Ausführen des nativen Softwareanwendungselements durch das native Betriebssystem umfassen. Beispielsweise kann das Manifest Informationen über den Inhalt des Containers bereitstellen, wie etwa die zur Laufzeit ermittelbare Version enthaltener Klassenbibliotheken oder dergleichen. Das Manifest kann auch als Bindeglied der einzelnen Dateien bzw. Elemente des Containers dienen. Das Manifest kann dazu eingerichtet sein, das native Betriebssystem dahingehend anzuweisen, wie das native Softwareanwendungselement auszuführen ist.

In einigen Ausführungsbeispielen kann das Manifest ferner Sicherheitsinformationen und/oder Rechteinformationen zu dem nativen Softwareanwendungselement für die Container-Laufzeitumgebung und/oder das native Betriebssystem umfassen.

In einigen Ausführungsbeispielen kann das native Softwareanwendungselement wenigstens eines der folgenden aufweisen und/oder ausbilden: eine Softwareanwendung oder einen Teil davon, eine Softwareaktualisierung, einen Software-Patch, ein Installationsprogramm, eine Aktualisierung für das native Betriebssystem, einen Hardwaretreiber, eine Hardwaretreiberaktualisierung oder eine BIOS-Aktualisierung.

Ein zweiter Aspekt betrifft die Verwendung eines Containers, der mit dem Verfahren gemäß dem ersten Aspekt bereitgestellt wird. Der Container wird in einem Computersystem verwendet, das ein natives Betriebssystem und eine darauf ausführbare Container-Laufzeitumgebung aufweist, ausführt und/oder betreibt. Die Container-Laufzeitumgebung ist dazu eingerichtet, den Container auszuführen und das darin gepackte native Softwareanwendungselement mittels des in dem Container gepackten Container-Proxys von der Container-Laufzeitumgebung zu dem nativen Betriebssystem zu überführen.

In anderen Worten wird also ermöglicht, auch ein natives Softwareanwendungselement mittels einer Container-Verwaltungsumgebung zu verwalten, bereitzustellen, usw. Die Container-Verwaltungsumgebung kann beispielsweise auch einen nativen Compiler aufweisen oder mit einem solchen zusammenwirken, der dazu eingerichtet sein kann, das native Softwareanwendungselement zu erstellen, zu verändern, usw. Die Container-Verwaltungsumgebung kann auch dazu eingerichtet sein, den Container über ein Speichermedium, ein Datennetzwerk oder dergleichen bereitzustellen und/oder zu verteilen. Gleichermaßen kann die Vorrichtung, auf der das native Betriebssystem ausgeführt wird, direkt oder indirekt mit der Container-Verwaltungsumgebung verbunden sein, um den Container von dort zu erhalten. Beispielsweise kann ein Nutzer der Vorrichtung, den Container einfach mittels der Container-Laufzeitumgebung ausführen, von der das native Softwareanwendungselement mittels des Container-Proxys, optional auch mittels des Manifests usw., hin zu dem nativen Betriebssystem überführt wird. Wie hierin beschrieben, kann da native Softwareanwendungselement dann auch system- bzw. gerätespezifische Funktionen der Vorrichtung nutzen, aktualisieren usw.

Das Computersystem kann beispielsweise ein Teil eines industriellen Systems, Feldgeräts, oder dergleichen sein oder ein solches ausbilden. Es kann beispielsweise zur Steuerung, Überwachung, oder dergleichen von industriellen Prozessen eingerichtet sein. Einige seiner Funktionen können vom nativen Betriebssystem abhängig sein. Das native Softwareanwendungselement kann sich insbesondere auf solche Funktionen des Computersystems beziehen.

Ein dritter Aspekt betrifft eine Vorrichtung zum Bereitstellen eines nativen Softwareanwendungselements. Die Vorrichtung weist wenigstens eine Datenschnittstelle auf, die dazu eingerichtet ist, das native Softwareanwendungselement zu empfangen. Zudem weist die Vorrichtung eine Verarbeitungslogik auf. Die Verarbeitungslogik ist dazu eingerichtet, das native Softwareanwendungselement in einen Container zu packen. Des Weiteren ist die Verarbeitungslogik dazu eingerichtet, einen Container-Proxy in den Container zu packen, wobei der Container-Proxy dazu eingerichtet ist, bei seiner Ausführung durch eine Container-Laufzeitumgebung das native Softwareanwendungselement von der Container-Laufzeitumgebung zu einem entsprechenden nativen Betriebssystem zu überführen. Zudem ist die wenigstens eine Datenschnittstelle und/oder die Verarbeitungslogik weiter dazu eingerichtet ist, den Container bereitzustellen.

Damit erlaubt es die vorgeschlagene Vorrichtung, native Softwareanwendungselemente mittels einer Container-Verwaltungsumgebung zu verwalten. Insbesondere lässt sich die Verwaltung hinsichtlich ihrer Komplexität verbessern, da das native Softwareanwendungselement gemeinsam mit anderen container-basierten Softwareanwendungen in einer gemeinsamen Container-Verwaltungsumgebung verwaltet werden kann. Dadurch kann die Verwaltung von nativen Softwareanwendungselementen technisch gesehen auf eine Container-Verwaltungsumgebung reduziert werden. Dies erweitert die container-basierte Verwaltung von Softwareanwendungen auf native Softwareanwendungselemente. Damit ist die technische Komplexität auf Seiten des Software-Entwicklers und/oder Software-Verwalters deutlich reduziert. Auch die Nutzererfahrung, d.h. die User Experience, lässt sich dadurch erhöhen, da der Nutzer neben der Container-Laufzeitumgebung kein weiteres System bedienen muss.

Die Vorrichtung kann Teil einer Container-Verwaltungsumgebung sein. Sie kann beispielsweise auch als Edge-Computersystem ausgeführt sein. Die Vorrichtung kann beispielsweise auch über eine Datennetzwerkverbindung mit einem oder mehreren Computersystemen, an die ein jeweiliges natives Softwareanwendungselement verteilt werden soll, verbindbar oder verbunden sein. Die Verarbeitungslogik kann jede Art von Recheneinheit, Prozessor, FPGA, usw. sein. Sie kann mit einem Speicher, z.B. für Programmcode, zusammenwirken. Die wenigstens eine Datenschnittstelle und die Verarbeitungslogik können operational miteinander gekoppelt sein. Die wenigstens eine Datenschnittstelle kann wenigstens eines von einem internen Bus, einem Industrie-Bus, einem Datennetzwerk, kabelgebunden oder kabellos, oder dergleichen umfassen.

In einigen Ausführungsbeispielen kann die wenigstens eine Datenschnittstelle ferner dazu eingerichtet sein, den Container und/oder das native Softwareanwendungselement fernzuüberwachen, fernzusteuern und/oder zu aktualisieren. Dies kann den gesamten Lebenszyklus des Containers und/oder des nativen Softwareanwendungselements betreffen.

Ein vierter Aspekt betrifft ein Verfahren zum Handhaben eines nativen Softwareanwendungselements. Das Verfahren umfasst das Erhalten eines Containers, der zumindest das native Softwareanwendungselement und einen Container-Proxy aufweist, wobei der Container-Proxy dazu eingerichtet ist, das native Softwareanwendungselement von der Container-Laufzeitumgebung zu einem entsprechenden nativen Betriebssystem zu überführen. Zudem umfasst das Verfahren das Ausführen des Containers mittels einer Container-Laufzeitumgebung und Überführen des nativen Softwareanwendungselements von der Container-Laufzeitumgebung zu dem nativen Betriebssystem durch Interaktion der Container-Laufzeitumgebung mit dem Container-Proxy.

Das Verfahren kann beispielsweise von einem Computersystem, wie etwa dem im zweiten Aspekt beschriebenen Computersystem ausgeführt werden. Das Verfahren kann dazu dienen, eine native Softwareanwendung, eine entsprechende Aktualisierung, einen Hardware-Treiber, eine BIOS-Aktualisierung, oder dergleichen auszuführen. Bezüglich der Ausgestaltung des Containers, des nativen Softwareanwendungselements, des Container-Proxys usw. wird auf die anderen hierin beschriebenen Aspekte verwiesen. Das Handhaben kann beispielsweise das Verarbeiten, Ausführen, oder dergleichen des nativen Softwareanwendungselements umfassen.

In einigen Ausführungsbeispielen kann beim Ausführen des Containers ferner eine Schnittstelle zur Fernüberwachung, Fernsteuerung und/oder Aktualisierung des Containers und/oder des nativen Softwareanwendungselements ausgebildet werden. Die Fernüberwachung, Fernsteuerung und/oder Aktualisierung kann beispielsweise von einer Container-Verwaltungsumgebung oder von irgendeinen anderen, insbesondere fernangeordneten, Computersystem, Vorrichtung oder dergleichen durchgeführt werden. Dementsprechend kann die Schnittstelle dazu eingerichtet sein, über ein Datennetzwerk auf das native Betriebssystem und/oder die Container-Laufzeitumgebung zuzugreifen.

Ein fünfter Aspekt betrifft eine Vorrichtung zum Handhaben eines nativen Softwareanwendungselements. Die Vorrichtung weist wenigstens eine Datenschnittstelle auf, die dazu eingerichtet ist, einen Container zu empfangen, der zumindest das native Softwareanwendungselement und einen Container-Proxy umfasst, wobei der Container-Proxy dazu eingerichtet ist, das native Softwareanwendungselement von einer Container-Laufzeitumgebung zu einem entsprechenden nativen Betriebssystem zu überführen. Zudem weist die Vorrichtung eine Verarbeitungslogik auf, die dazu eingerichtet ist, den Container mittels der Container-Laufzeitumgebung auszuführen und das native Softwareanwendungselement durch Interaktion der Container-Laufzeitumgebung mit dem Container-Proxy von der Container-Laufzeitumgebung zu dem nativen Betriebssystem zu überführen.

Die Vorrichtung kann Teil eines industriellen Geräts, Systems oder dergleichen sein. Das native Betriebssystem kann dazu verwendet werden, systemspezifische und/oder gerätespezifische Funktionen auszuführen. Spezifische Funktionen können beispielsweise auch Echtzeit-Bedingungen erfordern. Die Vorrichtung kann beispielsweise auch über eine Datennetzwerkverbindung mit einem oder mehreren Computersystemen, an die ein jeweiliges natives Softwareanwendungselement verteilt werden soll, verbindbar oder verbunden sein. Die Verarbeitungslogik kann jede Art von Recheneinheit, Prozessor, FPGA, usw. sein. Sie kann mit einem Speicher, z.B. für Programmcode, zusammenwirken. Die wenigstens eine Datenschnittstelle und die Verarbeitungslogik können operational miteinander gekoppelt sein. Die wenigstens eine Datenschnittstelle kann wenigstens eines von einem internen Bus, einem Industrie-Bus, einem Datennetzwerk, kabelgebunden oder kabellos, oder dergleichen umfassen. Das Handhaben kann beispielsweise das Verarbeiten, Ausführen, oder dergleichen des nativen Softwareanwendungselements umfassen.

In einigen Ausführungsbeispielen kann das native Betriebssystem Linux-basiert oder Linux sein. Der Container-Proxy und/oder optional das Manifest können dazu eingerichtet sein, mit einem oder mehreren Linux-Diensten und/oder Linux-Services zusammenzuwirken bzw. zu interagieren, um das native Softwareanwendungselement zu Linux zu überführen.

In einigen Ausführungsbeispielen kann die Container-Laufzeitumgebung und/oder das native Betriebssystem wenigstens einen Dienst aufweisen, ausführen und/oder betreiben, der für wenigstens eines der folgenden eingerichtet ist: Verifikation des nativen Softwareanwendungselements, Installation des nativen Softwareanwendungselements, Deinstallation des nativen Softwareanwendungselements, (Fern-)Überwachung des überführten nativen Softwareanwendungselements, und (Fern-)Steuerung des überführten nativen Softwareanwendungselements.

Ein sechster Aspekt betrifft ein Computerprogramm, umfassend Befehle, die bei der Ausführung des Programms durch einen Prozessor diesen veranlassen, das Verfahren gemäß dem ersten Aspekt auszuführen, das Verfahren gemäß dem vierten Aspekt auszuführen, die Vorrichtung gemäß dem dritten Aspekt zu implementieren, und/oder die Vorrichtung gemäß dem fünften Aspekt zu implementieren.

Das Computerprogramm kann beispielsweise über ein nichtflüchtiges Speichermedium, ein Datennetzwerk, wie etwa das Internet oder dergleichen, bereitgestellt werden.

Die oben beschriebenen Aspekte, Ausgestaltungen, Varianten und Beispiele können selbstverständlich kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### KURZBESCHREIBUNG DER FIGUREN

Im Folgenden wird die Erfindung unter Bezugnahme auf die Figuren der Zeichnungen erläutert. In den Figuren zeigen:
- Fig. 1: in einem schematischen Blockdiagramm eine exemplarische Vorrichtung zum Bereitstellen eines nativen Softwareanwendungselements,
- Fig. 2: in einem schematischen Blockdiagramm eine exemplarische Vorrichtung zum Handhaben eines nativen Softwareanwendungselements,
- Fig. 3: in einem schematischen Blockdiagramm ein Prinzip zur containerbasierten Bereitstellung und/oder Handhabung eines nativen Softwareanwendungselements,
- Fig. 4: in einem Flussdiagramm ein exemplarisches Verfahren zum Bereitstellen eines nativen Softwareanwendungselements und
- Fig. 5: in einem Flussdiagramm ein exemplarisches Verfahren zum Handhaben eines nativen Softwareanwendungselements.

### BESCHREIBUNG VON AUSFÜHRUNGSBEISPIELEN

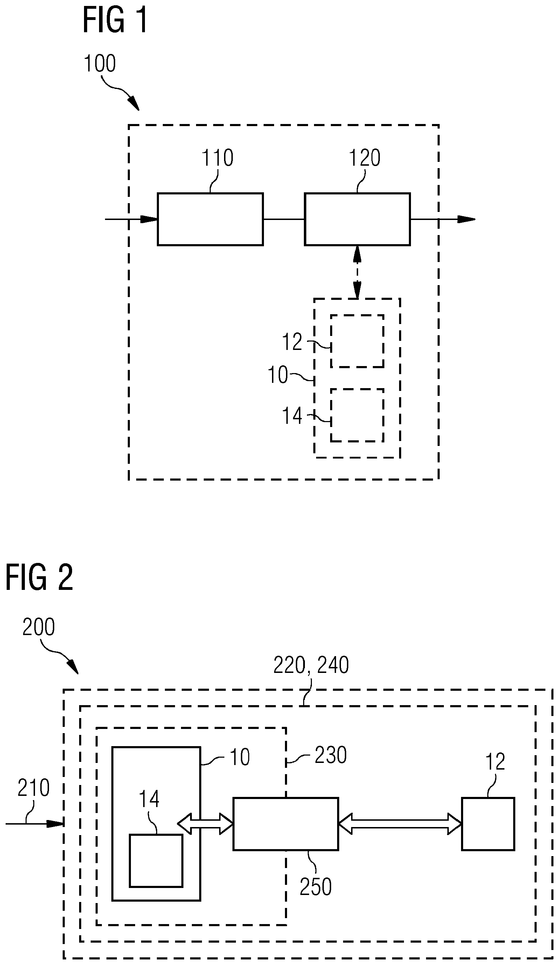

Fig. 1 zeigt in einem schematischen Blockdiagramm eine exemplarische Vorrichtung 100, die sich zum Bereitstellen eines nativen Softwareanwendungselements 12 eignet. Das native Softwareanwendungselement 12 kann für die Verwendung auf einer bestimmten Plattform bzw. einem bestimmtem, d.h. nativen, Betriebssystem oder einem bestimmten Gerät entwickelt bzw. erzeugt worden sein. Beispielsweise kann es als native Softwareanwendung oder Teil einer solchen dazu entwickelt und/oder ausgeführt sein, gerätespezifische Hardware und/oder Software zu verwenden. Es kann sich dabei beispielsweise um einen Patch, Update, oder dergleichen handeln. Das native Softwareanwendungselement kann beispielsweise als Computerprogramm bzw. Programmcode oder dergleichen bereitgestellt werden.

Die Vorrichtung 100 kann beispielsweise ein Computersystem sein, eine Container-Verwaltungsumgebung umfassen, eine solche ausbilden oder ein Teil einer solchen sein, usw. Die Vorrichtung 100 weist wenigstens eine Datenschnittstelle 110 und eine Verarbeitungslogik 120 auf. Die Datenschnittstelle 110 und die Verarbeitungslogik 120 sind miteinander gekoppelt. Die Verarbeitungslogik 120 kann jede Art von Recheneinheit, Prozessor, FPGA, usw. sein. Sie kann mit einem Speicher, z.B. für Programmcode, zusammenwirken. Die wenigstens eine Datenschnittstelle 110 kann wenigstens eines von einem internen Bus, einem Industrie-Bus, einem Datennetzwerk, kabelgebunden oder kabellos, oder dergleichen umfassen.

Die Datenschnittstelle 110 ist dazu eingerichtet, das native Softwareanwendungselement 12 zu empfangen. Die Verarbeitungslogik 120 ist dazu eingerichtet, das native Softwareanwendungselement 12 in einen Container 10 zu packen. Zudem ist die Verarbeitungslogik 120 dazu eingerichtet, einen Container-Proxy 14 in den Container 10 zu packen. Der Container-Proxy 14 ist dazu eingerichtet, bei seiner Ausführung durch eine Container-Laufzeitumgebung das native Softwareanwendungselement 12 von der Container-Laufzeitumgebung zu einem entsprechenden nativen Betriebssystem zu überführen. Zudem ist die wenigstens eine Datenschnittstelle 110 und/oder die Verarbeitungslogik 120 weiter dazu eingerichtet ist, den Container 10 bereitzustellen, wie dies in Fig. 1 mit einem Ausgangspfeil angedeutet ist.

Der Container-Proxy 14 kann als eine Art Hilfselement verstanden werden, das zum Vermitteln zwischen der Container-Laufzeitumgebung und dem nativen Betriebssystem eingerichtet ist. Er kann beispielsweise Anweisungen, Systemdienste, Programmcode, Systembibliotheken, Einstellungen, oder dergleichen umfassen. Der Container-Proxy 14 kann auch als Einstiegspunkt zum Handhaben, Ausführen, usw. des nativen Softwareanwendungselements eingerichtet sein.

Das native Softwareanwendungselement 12, der Container-Proxy 14 und/oder der Container 10 können beispielsweise wenigstens eines von einer Binärdatei, einem Manifest, einer Signatur, einer Sicherheitsregel, einer Rechteinformation oder dergleichen als Nutzlast umfassen, die somit auch Teil des Containers 10 sein können.

Fig. 2 zeigt in einem schematischen Blockdiagramm eine exemplarische Vorrichtung 200, die sich zum Handhaben, z.B. Installieren, Überführen, Ausführen, usw., eines bzw. des nativen Softwareanwendungselements 12 eignet.

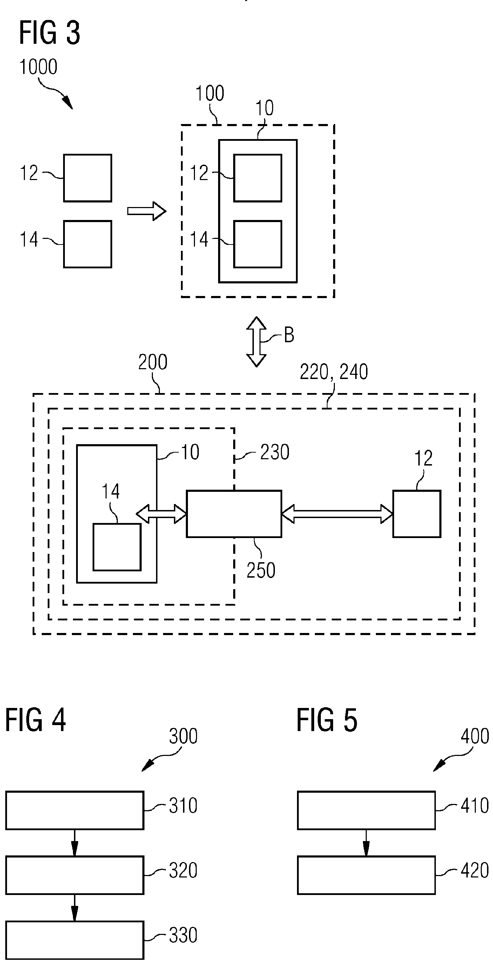

Die Vorrichtung 200 kann mit der oben beschriebenen Vorrichtung 100 zusammenwirken bzw. interagieren. Somit können die Vorrichtungen 100 und 200 auch ein System ausbilden, das weiter unten unter Bezugnahme auf Fig. 3 (als System 1000) noch detaillierter beschrieben wird. Die Vorrichtung 200 kann beispielsweise ein Computersystem sein. Die Vorrichtung 200 und/oder das Computersystem kann beispielsweise ein Teil eines industriellen Systems, Feldgeräts, oder dergleichen sein oder ein solches ausbilden. Es kann beispielsweise zur Steuerung, Überwachung, oder dergleichen von industriellen Prozessen eingerichtet sein. Einige seiner Funktionen können vom nativen Betriebssystem abhängig sein. Das native Softwareanwendungselement kann sich insbesondere auf solche Funktionen des Computersystems und/oder der Vorrichtung 200 beziehen.

Weiter Bezug nehmend auf Fig. 2, weist die Vorrichtung 200 wenigstens eine Datenschnittstelle 210 und eine Verarbeitungslogik 220 auf. Die Datenschnittstelle 210 und die Verarbeitungslogik 220 sind miteinander gekoppelt. Die Verarbeitungslogik 220 kann jede Art von Recheneinheit, Prozessor, FPGA, usw. sein. Sie kann mit einem Speicher, z.B. für Programmcode, zusammenwirken. Die wenigstens eine Datenschnittstelle 210 kann wenigstens eines von einem internen Bus, einem Industrie-Bus, einem Datennetzwerk, kabelgebunden oder kabellos, oder dergleichen umfassen.

Die Datenschnittstelle 210 ist dazu eingerichtet, den Container 10 zu empfangen, beispielsweise von der Vorrichtung 100 oder einer anderen Datenquelle. Wie oben beschrieben, umfasst der Container 10 zumindest das native Softwareanwendungselement 12 und den Container-Proxy 14. Der Container-Proxy 14 ist dazu eingerichtet ist, das native Softwareanwendungselement 12 von einer Container-Laufzeitumgebung 230 zu einem entsprechenden nativen Betriebssystem 240, das von der Vorrichtung 200 und/oder einem diesen zugeordneten Gerät und/oder System betrieben werden kann, zu überführen. Das native Betriebssystem 240 kann beispielsweise Linux-basiert oder Linux sein, wobei die Vorrichtung 200 auch für andere native Betriebssysteme ausgelegt sein kann.

Die Container-Laufzeitumgebung 230 kann von der Vorrichtung 200 und/oder der Verarbeitungslogik 220 bereitgestellt und/oder betrieben werden. Die Vorrichtung 200 kann beispielsweise auch dazu eingerichtet sein, einen oder mehrere Dienste und/oder Services 250 auszuführen und/oder zu betreiben, wie etwa einen Installationsdienst, eine Rechteverwaltung oder dergleichen. Der wenigstens eine Dienst 250 kann für wenigstens eines der folgenden eingerichtet sein: Verifikation des nativen Softwareanwendungselements 12, Installation des nativen Softwareanwendungselements 12, Deinstallation des nativen Softwareanwendungselements 12, Überwachung des überführten nativen Softwareanwendungselements 12, und Fernsteuerung des überführten nativen Softwareanwendungselements 12. Gleichermaßen kann auch der Container 10 überwacht und/oder ferngesteuert werden.

Durch ein Zusammenwirken der Container-Laufzeitumgebung 230, des nativen Betriebssystems 240, des Container-Proxys 14 und/oder des wenigstens einen Dienstes und/oder Services 250, ist die Vorrichtung 200 dazu eingerichtet, das native Softwareanwendungselement 12 von der Container-Laufzeitumgebung 230 hin zu dem oder in das native Betriebssystem 240 zu überführen, zu transferieren, zu installieren, zu deinstallieren, oder dergleichen.

Fig. 3 zeigt in einem schematischen Blockdiagramm ein Prinzip zur containerbasierten Bereitstellung und/oder Handhabung eines nativen Softwareanwendungselements 12. Das Prinzip führt als System 1000 die oben beschriebenen Vorrichtungen 100 und 200 zusammen.

Zunächst wird mittels der Vorrichtung 100 der Container 10 erstellt, generiert oder dergleichen. Der Container 10 umfasst zumindest das native Softwareanwendungselement 12 und den Container-Proxy 14. Die Vorrichtung 100 kann beispielsweise eine Container-Verwaltungsumgebung umfassen, eine solche ausbilden oder ein Teil einer solchen sein. Die Vorrichtung 100 kann dazu eingerichtet sein, den Container 10 bereitzustellen, beispielsweise wie hier für die Vorrichtung 200. Die Bereitstellung kann beispielsweise auch aus der Ferne über ein Datennetzwerk, ein transportierbares und/oder übertragbares Speichermedium oder dergleichen erfolgen. Die Vorrichtung 100 kann dazu eingerichtet sein, den Container 10, das native Softwareanwendungselement 12 und/oder den Container-Proxy 14 bereitzustellen, zu überwachen, zu steuern, zu aktualisieren, usw.

Der so bereitgestellte Container 10 kann von der Vorrichtung 200 empfangen und verarbeitet werden. Die Vorrichtung 200 betreibt das native Betriebssystem 240 und die Container-Laufzeitumgebung 230. Die Vorrichtung 200 betreibt beispielsweise einen oder mehrere Dienste und/oder Services 250, wie etwa einen Installationsdienst, eine Rechteverwaltung oder dergleichen. Durch ein Zusammenwirken der Container-Laufzeitumgebung 230, des nativen Betriebssystems 240, des Container-Proxys 14 und/oder des einen oder der mehreren Dienste und/oder Services 250, ist die Vorrichtung 200 dazu eingerichtet, das native Softwareanwendungselement 12 von der Container-Laufzeitumgebung 230 hin zu dem oder in das native Betriebssystem 240 zu überführen, zu transferieren, zu installieren, zu deinstallieren, oder dergleichen.

Fig. 4 illustriert in einem Flussdiagramm ein Verfahren 300 zum Bereitstellen eines nativen Softwareanwendungselements 12. Das Verfahren kann beispielsweise mit der oben beschriebenen Vorrichtung 100 ausgeführt werden. Das Verfahren 300 umfasst das Packen 310 des nativen Softwareanwendungselements 12 in einen Container 10. Zudem umfasst das Verfahren das Packen eines Container-Proxys 14 in den Container 10, wobei der Container-Proxy 14 dazu eingerichtet ist, bei seiner Ausführung durch eine Container-Laufzeitumgebung das native Softwareanwendungselement 12 von der Container-Laufzeitumgebung zu einem entsprechenden nativen Betriebssystem zu überführen. Des Weiteren umfasst das Verfahren 300 das Bereitstellen 330 des Containers 10.

Fig. 5 illustriert in einem Flussdiagramm ein Verfahren 400 zum Handhaben eines nativen Softwareanwendungselements 12. Das Verfahren kann beispielsweise mit der oben beschriebenen Vorrichtung 200 ausgeführt werden. Das Verfahren 400 umfasst das Erhalten 410 eines Containers 10, der zumindest das native Softwareanwendungselement 12 und einen Container-Proxy 14 aufweist, wobei der Container-Proxy 14 dazu eingerichtet ist, das native Softwareanwendungselement 12 von einer Container-Laufzeitumgebung zu einem entsprechenden nativen Betriebssystem zu überführen. Zudem umfasst das Verfahren 400 das Ausführen des Containers 10 mittels der Container-Laufzeitumgebung und Überführen des nativen Softwareanwendungselements von der Container-Laufzeitumgebung zu dem nativen Betriebssystem durch Interaktion der Container-Laufzeitumgebung mit dem Container-Proxy 14.

Es sei angemerkt, dass die Verfahren 300 und/oder 400 auch von den oben beschriebenen System 1000 ausgeführt werden können.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (300) zum Bereitstellen eines nativen Softwareanwendungselements (12), wobei das Verfahren umfasst:
Packen (310) des nativen Softwareanwendungselements (12) in einen Container (10),
Packen (310) eines Container-Proxys (14) in den Container (10), wobei der Container-Proxy (14) dazu eingerichtet ist, bei seiner Ausführung durch eine Container-Laufzeitumgebung das native Softwareanwendungselement (12) von der Container-Laufzeitumgebung zu einem entsprechenden nativen Betriebssystem zu überführen, und Bereitstellen (330) des Containers (10).

2. Verfahren nach Anspruch 1, wobei der Container-Proxy (14) für eine Mehrzahl von zueinander unterschiedlichen nativen Softwareanwendungselementen (12) anwendbar ist und/oder diesen gemeinsam ist.

3. Verfahren nach Anspruch 1 oder 2, wobei der Container-Proxy (14) eine Verknüpfung zwischen dem nativen Softwareanwendungselement (12) und der Container-Laufzeitumgebung und/oder dem nativen Betriebssystem aufweist und/oder ausbildet.

4. Verfahren nach einem der vorhergehenden Ansprüche, weiter umfassend:
Packen eines Manifests in den Container (10), wobei das Manifest spezifisch für das native Softwareanwendungselement (12) ist und zumindest Informationen zu dem nativen Softwareanwendungselement (12) und/oder zur Verwendung und/oder zum Ausführen des nativen Softwareanwendungselements (12) durch das native Betriebssystem umfasst.

5. Verfahren nach Anspruch 4, wobei das Manifest ferner Sicherheitsinformationen und/oder Rechteinformationen zu dem nativen Softwareanwendungselement (12) für die Container-Laufzeitumgebung und/oder das native Betriebssystem umfasst.

6. Verfahren nach einem der vorhergehenden Ansprüche, wobei das native Softwareanwendungselement (12) wenigstens eines der folgenden aufweist und/oder ausbildet: eine Softwareanwendung oder einen Teil davon, eine Softwareaktualisierung, ein Installationsprogramm, eine Aktualisierung für das native Betriebssystem, einen Hardwaretreiber, eine Hardwaretreiberaktualisierung oder eine BIOS-Aktualisierung.

7. Verwendung eines Containers (10), der mit dem Verfahren nach einem der vorhergehenden Ansprüche bereitgestellt wird, in einem Computersystem, das ein natives Betriebssystem und eine darauf ausführbare Container-Laufzeitumgebung aufweist und/oder betreibt, wobei die Container-Laufzeitumgebung dazu eingerichtet ist, den Container (10) auszuführen und das darin gepackte native Softwareanwendungselement (12) mittels des in dem Container (10) gepackten Container-Proxys (14) von der Container-Laufzeitumgebung zu dem nativen Betriebssystem zu überführen.

8. Vorrichtung (100) zum Bereitstellen eines nativen Softwareanwendungselements (12), wobei die Vorrichtung aufweist:
wenigstens eine Datenschnittstelle (110), die dazu eingerichtet ist, das native Softwareanwendungselement (12) zu empfangen, und
eine Verarbeitungslogik (120), die dazu eingerichtet ist:
das native Softwareanwendungselement (12) in einen Container (10) zu packen,
einen Container-Proxy (14) in den Container (10) zu packen, wobei der Container-Proxy (14) dazu eingerichtet ist, bei seiner Ausführung durch eine Container-Laufzeitumgebung das native Softwareanwendungselement (12) von der Container-Laufzeitumgebung zu einem entsprechenden nativen Betriebssystem zu überführen, und
den Container (10) bereitzustellen.

9. Vorrichtung (100) nach Anspruch 8, wobei die wenigstens eine Datenschnittstelle (110) und/oder die Verarbeitungslogik (120) ferner dazu eingerichtet ist, den Container (10) und/oder das native Softwareanwendungselement (12) fernzuüberwachen, fernzusteuern und/oder zu aktualisieren.

10. Verfahren zum Handhaben eines nativen Softwareanwendungselements (12), wobei das Verfahren umfasst:
Erhalten eines Containers (10), der zumindest das native Softwareanwendungselement (12) und einen Container-Proxy (14) aufweist, wobei der Container-Proxy (14) dazu eingerichtet ist, das native Softwareanwendungselement (12) von einer Container-Laufzeitumgebung zu einem entsprechenden nativen Betriebssystem zu überführen,
Ausführen des Containers (10) mittels der Container-Laufzeitumgebung und Überführen des nativen Softwareanwendungselements (12) von der Container-Laufzeitumgebung zu dem nativen Betriebssystem durch Interaktion der Container-Laufzeitumgebung mit dem Container-Proxy (14).

11. Verfahren nach Anspruch 10, wobei beim Ausführen des Containers (10) ferner eine Schnittstelle zur Fernüberwachung, Fernsteuerung und/oder Aktualisierung des Containers (10) und/oder des nativen Softwareanwendungselements (12) ausgebildet wird.

12. Vorrichtung (200) zum Handhaben eines nativen Softwareanwendungselements (12), wobei die Vorrichtung (200) aufweist:
wenigstens eine Datenschnittstelle (210), die dazu eingerichtet ist, einen Container (10) zu empfangen, der zumindest das native Softwareanwendungselement (12) und einen Container-Proxy (14) umfasst, wobei der Container-Proxy (14) dazu eingerichtet ist, das native Softwareanwendungselement (12) von einer Container-Laufzeitumgebung (230) zu einem entsprechenden nativen Betriebssystem (240) zu überführen,
eine Verarbeitungslogik (220), die dazu eingerichtet ist, den Container (10) mittels der Container-Laufzeitumgebung (230) auszuführen und das native Softwareanwendungselement (12) durch Interaktion der Container-Laufzeitumgebung (230) mit dem Container-Proxy (14) von der Container-Laufzeitumgebung (230) zu dem nativen Betriebssystem (240 zu überführen.

13. Vorrichtung (200) nach Anspruch 12, wobei das native Betriebssystem Linux-basiert oder Linux ist.

14. Vorrichtung (200) nach Anspruch 12 oder 13, wobei die Container-Laufzeitumgebung wenigstens einen Dienst aufweist und/oder betreibt, der für wenigstens eines der folgenden eingerichtet ist: Verifikation des nativen Softwareanwendungselements (12), Installation des nativen Softwareanwendungselements (12), Deinstallation des nativen Softwareanwendungselements (12), Überwachung des überführten nativen Softwareanwendungselements (12), und Fernsteuerung des überführten nativen Softwareanwendungselements (12).

15. Computerprogramm, umfassend Befehle, die bei der Ausführung des Programms durch einen Prozessor diesen veranlassen, das Verfahren nach einem der Ansprüche 1 bis 6 auszuführen, das Verfahren nach einem der Ansprüche 9 bis 11 auszuführen, die Vorrichtung (100) nach Anspruch 8 oder 9 zu implementieren, und/oder die Vorrichtung (200) nach einem der Ansprüche 12 bis 14 zu implementieren.
